Europäisches Patentamt

European Patent Office

Office européen des brevets

(19)

(11) Veröffentlichungsnummer : **0 122 924**
**B1**

# (12) EUROPÄISCHE PATENTSCHRIFT

(45) Veröffentlichungstag der Patentschrift :
30.12.86

(21) Anmeldenummer : 83903184.6

(22) Anmeldetag : 20.10.83

(86) Internationale Anmeldenummer :
PCT/EP 83/00272

(87) Internationale Veröffentlichungsnummer :
WO/8401601 (26.04.84 Gazette 84/11)

(51) Int. Cl.⁴ : **E 04 G 23/02, F 16 B 13/14**

(54) INJEKTIONSVORRICHTUNG.

(30) Priorität : 21.10.82 DE 8229583 U

(43) Veröffentlichungstag der Anmeldung :
31.10.84 Patentblatt 84/44

(45) Bekanntmachung des Hinweises auf die Patenterteilung : 30.12.86 Patentblatt 86/52

(84) Benannte Vertragsstaaten :
AT BE CH DE FR GB LI NL SE

(56) Entgegenhaltungen :
AT-A-   360 067
DE-B- 2 349 659
DE-B- 2 903 137
DE-C- 2 833 546
FR-A- 2 223 587
US-A- 4 300 859

(73) Patentinhaber : IPA-BAUCHEMIE GMBH
Neufahrn 55
D-8195 Egling 1 (DE)

(72) Erfinder : GRAMMERSTORF, Werner
Hofbrunnstr. 93
D-8000 München 71 (DE)
Erfinder : WEISS, Hugo
Kelterweg 14
D-7117 Bretzfeld-Bitzfeld (DE)

(74) Vertreter : Müller, Hans-Jürgen, Dipl.-Ing. et al
Müller, Schupfner & Gauger Lucile-Grahn-Strasse 38
Postfach 80 13 69
D-8000 München 80 (DE)

## Beschreibung

Die Erfindung bezieht sich auf eine Injektionsvorrichtung der im Oberbegriff des Anspruches 1 genannten Gattung.

Derartige bereits bekannte Injektionsvorrichtungen (DE-C-28 33 546), die nachstehend auch als Injektionsanker bezeichnet werden, dienen dazu, daß Injektionsmaterial, darunter insbesondere Kunstharze, in Löcher von Gesteinen, Bauwerkteilen oder dgl. injiziert wird, um dort das behandelte Material insbesondere zu festigen. Das Injektionsmaterial dient vor allem auch zum Ausfüllen von Rissen, Poren und anderen Hohlräumen, wodurch beispielsweise poröse Gesteine oder Erdformationen flüssigkeitsdicht gemacht werden können. Das Injektionsmaterial kann aber auch die Aufgabe haben, nach dem Injizieren in das behandelte Material dieses beispielsweise zu Abbauzwecken zu lösen, wie dies beispielsweise bei Salzstöcken oder Erzgängen zweckmäßig ist. Um das Injektionsmaterial möglichst weit in die Poren, Risse, Gänge oder dgl. Hohlräume der Gesteine, Bauwerkteile, Mauern oder dgl. eindringen zu lassen, hat der Injektionsanker die Aufgabe, zwar das Injektionsmaterial durch den Injektionsanker hindurch in den vom Injektionsanker versperrten Gang des Loches einzuführen, das Wiederaustreten des Injektionsmaterials aus dem Loch unter Umgehung des Injektionsankers, d. h. zwischen dem Injektionsanker und der Lochwandung jedoch zu vermeiden. Dies ist besonders wichtig, wenn Injektionsmaterial unter hohem Druck in das Loch eingespritzt wird.

Um diesen Aufgaben gerecht zu werden, ist es bereits bekannt (Maschinenmarkt, 7. September 1982, Seite 13), als Kunststoffdübel ausgebildete Injektionsanker in das Loch einzutreiben und diese dort ohne Spreizkräfte, allein durch Reibungskräfte im Loch zu halten. Ein bereits bekannter Injektionsanker ähnlicher Art (US-A-3 57-2 956) besteht darin, daß zuerst die Dichtbuchse in das Loch eingesteckt wird, um dann die sich vom Kopfteil ausgehend konisch verbreiternde Injektionshülse in die Dichtbuchse einzutreiben, so daß sich diese unter der radialen Druckwirkung an die Lochwandung anpreßt. Ähnliche bekannte Injektionsanker (DE-U-69 21 043 und 75 32 327) sind in Form von Spreizdübeln ausgebildet, bei denen die Injektionshülse am Kopfteil geschlitzt ist und durch geeignete Spreizorgane nach außen gespreizt werden kann, um die Dichtbuchse nach außen an die Wandung des Loches anzudrücken.

Schließlich ist es auch bekannt (DE-C-588 407), eine Lanze in das Loch einzuführen, die an ihrem vorderen Ende mit zwei im Abstand voneinander angeordneten Schläuchen versehen ist, welche nach dem Einführen der Lanze mit den Schläuchen in das Loch mittels Preßluft so aufgeblasen werden, daß sich die Schlauchwandungen an die Lochwandung anlegen und das Loch abdichten. In den Zwischenraum zwischen den beiden aufgeblasenen Schläuchen wird dann das Injektionsmittel durch die Lanze und Lanzendurchbrechungen hindurch eingepreßt.

Ferner ist eine weitere, dem Oberbegriff des vorliegenden Anspruches 1 etwa entsprechende Einrichtung aus der DE-B-2 903 137 bekannt, die aber aus sehr vielen Einzelteilen besteht und bei der das als Gummiring ausgebildete Dichtelement allein nicht in der Lage ist, den Injektionsanker im Loch festzuhalten. Bei einem anderen Spreizdübel nach der AT-A-360 067 ist es bekannt, den als Verschlußstopfen dienenden Teil mit radial nach außen beim Zurückziehen aus dem Loch sich abspreizenden Spreizfüßen zu versehen; eine Abdichtung ist hier aber nicht ohne weiteres möglich.

Alle diese bekannten Injektionsvorrichtungen oder Injektionsanker weisen jedoch den Nachteil auf, daß ihre Herstellung verhältnismäßig teuer ist und auch die Anwendung vielfach eine Reihe von Manipulationen erfordert.

Der Erfindung liegt daher die schon seit langem bekannte Aufgabe zugrunde, die Injektionsvorrichtung dahingehend zu verbessern, daß er trotz einfacher und preiswerter Herstellbarkeit und einfachem Aufbau auch einfach handhabbar ist.

Die Erfindung besteht darin, daß die Dichtbuchse mindestens eine elastisch radial nach innen drückbare Sperrlippe aufweist, die mindestens teilweise radial über die äußere Mantelfläche vorsteht und durch Verformen beim Zurückziehen der Injektionshülse in Richtung zum Endteil als Halteelement dient.

Die insbesondere zweiteilig ausgebildete Injektionsvorrichtung wird nach dem Einführen des Kopfteils in das Loch so weit in dieses hineingeschoben, wie dies vom Anwender gewünscht wird. Die Sperrlippe wird dabei von der Lochwandung radial nach innen gedrückt, ohne das Entlangschieben in der Richtung nach vorn, d. h. zum Kopfteil wesentlich zu behindern. Wird die Injektionsvorrichtung dagegen in die entgegengesetzte Richtung, d. h. zum Endteil innerhalb des Loches bewegt, so verformt sich die Sperrlippe radial so weit nach außen, daß sie nicht nur genügend abdichtet, sondern auch für eine sichere Verankerung der Injektionsvorrichtung innerhalb des Loches sorgt.

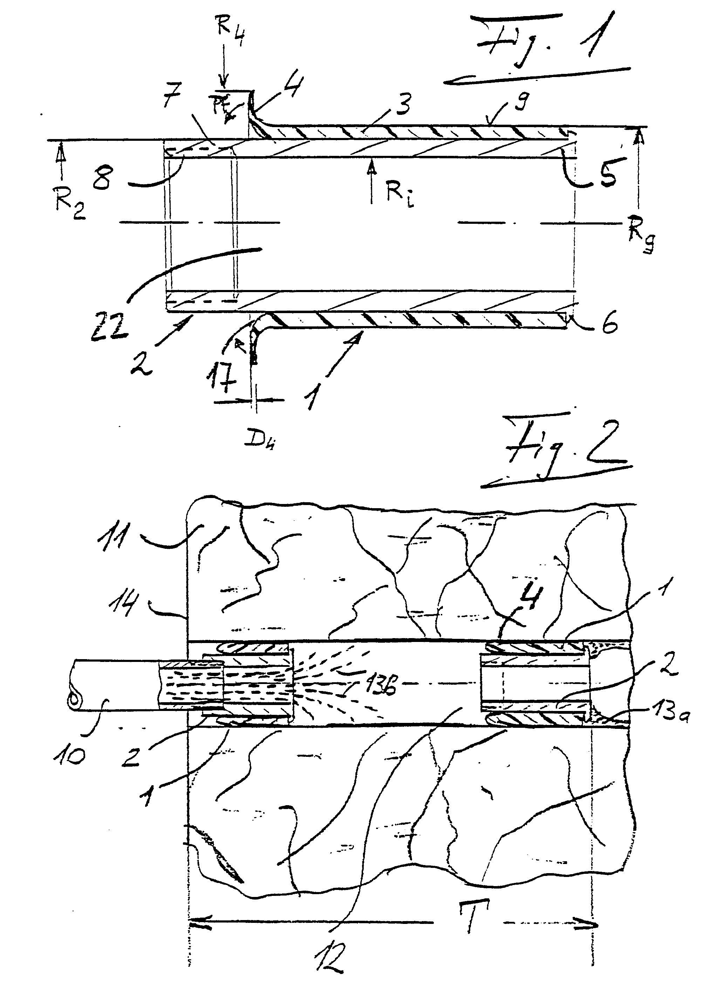

Die Sperrlippe besteht zweckmäßigerweise aus elastomerem Material, wie Gummi, und ist vor allem ringförmig ausgebildet. Es ist jedoch auch möglich, lappenförmige Sperrlippen auf der äußeren Mantelfläche der Dichtbuchse bzw. derem Hauptkörper so zu verteilen, daß diese Sperrlippen ihre Aufgabe zum Abdichten und Verankern der Injektionsvorrichtung erfüllen können. Diese Aufgabe wird dann besonders gut gelöst, wenn mehrere, beispielsweise zwei ringförmige Sperrlippen in axialem Abstand von der Mantelfläche abstehen. Die Dichtbuchse selbst bzw. deren Hauptkörper muß im Unterschied zu den meisten bekannten Injektionsankern nicht etwas konisch ausgebildet sein. Es empfiehlt sich, wenn der Hauptkörper der Dichtbuchse im wesentlichen ein Hohlzylinder ist. So ist es beispielsweise möglich, von einem Kautschukrohr bzw. Kautschukschlauch einzelne Schlauchstücke abzulängen und an einer Stirnseite durch Anwendung von Druck und Wärme so breit zu drücken, daß sich das eine Stirnende zu einer flanschartigen Manschette radial nach außen bleibend verformt, nach dem Abkühlen jedoch noch seine biegeelastischen Eigenschaften beibehält, wie dies beispielsweise in Figur 1 gezeigt ist.

Die Dichtbuchse ist nach einer besonders zweckmäßigen und einfachen Ausbildung der Erfindung auf die Injektionshülse aufgesteckt und schlägt an einem Anschlag im Bereich des Kopfteils der Injektionshülse an. Dies ist wichtig, damit die Injektionshülse beim Zurückziehen des Injektionsankers innerhalb des Loches nicht aus der Dichtbuchse herausgezogen wird, sondern die Dichtbuchse in der Bewegungsrichtung mitzuziehen sucht, um dadurch die Sperrlippe bzw. Sperrlippen in die abdichtende Verankerungsstellung zwischen der Wandung des Loches, beispielsweise in der mit Injektionsmaterial zu behandelnden Mauer und der Injektionshülse, zu bringen.

Die Injektionshülse besteht nach einer Ausbildung der Erfindung aus im Vergleich zur Dichtbuchse im wesentlichen formstabilem Material. Aluminium wird deshalb bevorzugt, weil die Gefahr des Rostens und der Abgabe von Rostspuren nach außerhalb des Loches vermieden wird. Es kann jedoch auch Kunststoff als Material für die Injektionshülse verwendet werden.

Darüber hinaus ist es aber auch möglich, Injektionshülse und Dichtbuchse aus gleichem Material herzustellen, so daß beide Aggregate ein einziges Formstück aus beispielsweise Kunststoff bilden. Dabei ist nur dafür zu sorgen, daß die Sperrlippe bzw. die Sperrlippen in der Einschiebrichtung in das Loch das Einschieben nicht wesentlich behindern, in der Rückziehrichtung sich jedoch nach Art von Klemmkeilen oder dgl. Sperrkörpern zwischen Injektionsanker und die Wandung des Loches einklemmen, um hierdurch den Injektionsanker im Loch zu verankern und abzudichten.

Das Anschlußelement zum Anschließen eines Zuführorgans für das Injektionsmittel zum Injektionsanker ist zweckmäßigerweise ein Innengewinde in der Injektionshülse, und zwar an dem dem Kopfteil abgewandten Endteil. Dieses Innengewinde kann zuerst dazu dienen, daß der Injektionsanker nach Einschrauben einer am äußeren Ende mit einem Außengewinde versehenen Stange, der gewünschten Tiefe entsprechend, in das Loch eingeführt wird. Sofern diese Stange nicht selbst als Zuführorgan oder Teil desselben bzw. als Verbindungsstück zwischen dem Injektionsanker und dem eigentlichen Zuführorgan, beispielsweise einer Spritzpistole, verwendet wird, wird die Stange aus dem Innengewinde herausgeschraubt und anschließend das eigentliche Zuführorgan in das gleiche Innengewinde eingeschraubt, ehe die Injektion durch den Durchtrittskanal der Injektionshülse in den Raum im Loch hinter dem Injektionsanker eingespritzt wird.

Der Injektionsanker, insbesondere dessen Injektionshülse, kann auch mit einem Rückschlagventil versehen sein, das verhindert, daß eingespritztes Injektionsmaterial aus der Injektionshülse wieder nach außen austritt, jedoch ermöglicht, daß bei Überschreiten eines bestimmten Injektionsdruckes im Ventilkörper insbesondere eine Kugel sich vom Ventilsitz abhebt und das Einspritzen und Hindurchspritzen von Injektionsmaterial durch den Injektionsanker erlaubt.

Die Neuerung ermöglicht es, daß der Injektionsanker beliebig weit in das Loch im Mauerwerk, im Gestein, im Beton, Fundamenten oder dgl. eingeschoben werden kann, ohne daß entsprechend lange Teile des Injektionsankers selbst verwendet werden müssen, die nach der Verankerung desselben an diesem verbleiben und daher verlorengehen. Das Abnehmen, insbesondere Abschrauben, eines solchen zum Positionieren des Injektionsankers im Loch verwendeten Stange oder dgl. Beförderungsorgans reduziert nicht nur den verlorengehenden Materialbedarf, sondern vermeidet auch, daß nach der Verankerung und insbesondere nach dem Einbringen des Injektionsmaterials Teile aus dem Loch in der Mauer, dem Gestein oder dgl. herausragen und vor allem bei Sichtwänden nachträglich abgetragen, beispielsweise abgemeißelt oder mit Sichtblenden versehen werden müssen. Es kann daher mit weniger Materialaufwand auch schneller gearbeitet werden, ohne daß störende Teile nach dem Injizieren zu sehen sind.

Besondere Bedeutung gewinnt die Neuerung gegenüber dem Stand der Technik auch dadurch, daß in ein und demselben Loch mehrere einzelne Injektionsanker axial hintereinander angeordnet werden können :

So wird zuerst ein Injektionsanker am weitesten in das Loch hineinbefördert und dort durch Zurückziehen eine kleine Strecke weit verankert, worauf das Injizieren in den unmittelbar hinter diesen tief eingeführten Injektionsanker gelegenen Bezirk erfolgt. Danach wird ein zweiter Injektionsanker in das Loch eingeführt, jedoch in einem Abstand zu dem bereits verankerten ersten Injektionsanker, worauf das Injizieren in den Bereich zwischen den beiden verankerten Injektionsankern erfolgt. Dieses Verfahren kann sich fortsetzen, so daß gezielt mehrere Teilbereiche auf die Tiefe des Loches hin mit Injektionsmaterial versehen werden können. Dadurch kann vermieden werden, daß auf eine bestimmte Fläche zu viele Bohrungen nebeneinander gesetzt werden müssen, um die Löcher für das Einbringen von Injektionsmaterial herzustellen, wenn eine bestimmte Menge Injektionsmaterial in das poröse Mauerwerk oder dgl. zu behandelnde Material eingepreßt wird. Es wird nicht nur die Anzahl der vorzunehmenden Bohrungen vermindert, sondern es wird auch dafür Sorge getragen, daß infolge der geringeren Anzahl von Löchern der Querschnitt des zu behandelnden Materials, insbesondere Gesteins, Mauerwerk oder dgl. zu stark geschwächt wird. Die Neuerung ist daher besonders gut dort anzuwenden, wo es, wie bei Brückenfundamenten oder dgl., darauf ankommt, daß die Statik nicht beeinträchtigt wird.

Anhand der Zeichnungen sind besondere Ausbildungen der Neuerung im folgenden näher erläutert : Darin zeigen :

Figur 1 einen schematischen Querschnitt durch einen Injektionsanker ;

Figur 2 einen schematischen Querschnitt durch eine Gesteinsschicht, die mit einem Loch versehen ist, in dem zwei Injektionsanker verankert sind, von denen der eine Injektionsanker seine Aufgabe bereits erfüllt hat, während der andere, nicht so tief in das Loch eingeführte Injektionsanker seine Aufgabe zum Einspritzen des Injektionsmaterials gerade erfüllt ;

Figur 3 im Querschnitt ein Teil eines Betonfundaments mit drei Löchern zur Darstellung dreier verschiedener Positionen des Injektionsankers und

Figuren 4 bis 7 im Querschnitt andere Ausbildungen eines Injektionsankers.

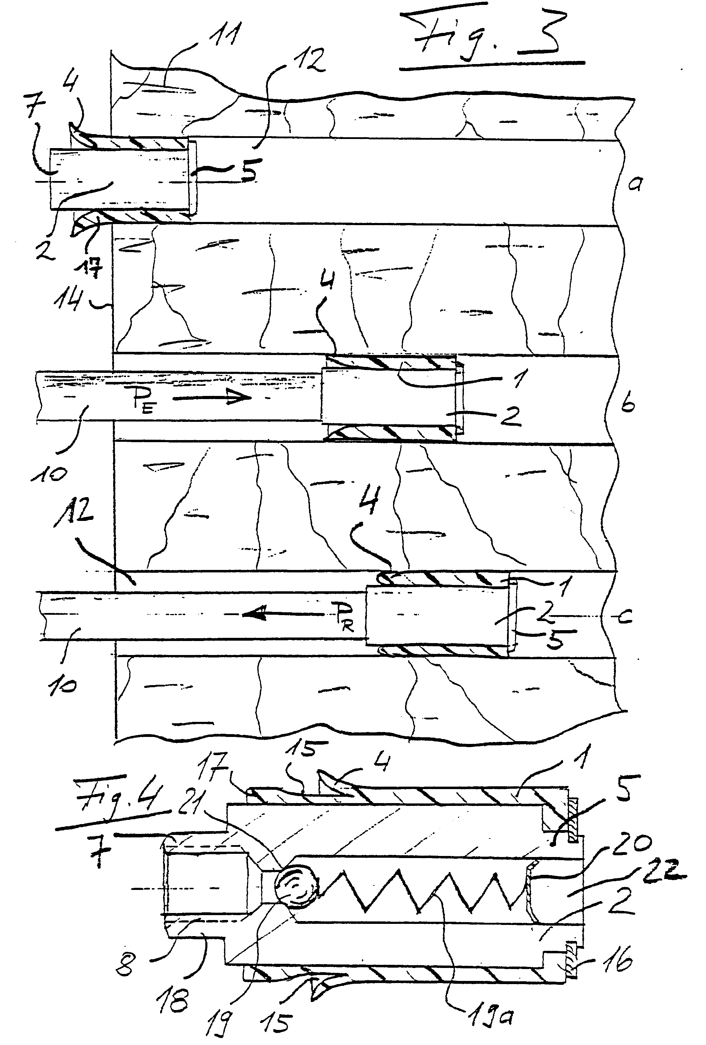

Gemäß Fig. 1 besteht der Injektionsanker aus der Dichtbuchse 1 und der Injektionshülse 2. Die Dichtbuchse 1 aus Kautschuk ist mit einem im wesentlichen zylindrischen Hauptkörper 3 versehen, der an einem Ende radial nach außen ausgeformt ist, wodurch sich eine im wesentlichen ringförmige Sperrlippe 4 an diesem Endteil 17 ergibt, deren Außenradius $R_4$ größer ist als der $R_9$ der äußeren zylindrischen Mantelfläche 9 der Dichtbuchse 1. Der Außendurchmesser $R_2$ der Injektionshülse 2 aus Aluminium entspricht in etwa dem Innendurchmesser der Dichtbuchse 1. Am Kopfteil 5 der Injektionshülse 2 ist deren Stirnende umgebördelt, wodurch sich ein Anschlag 6 ergibt, der das Abziehen der Dichtbuchse 1 von der Injektionshülse in Richtung nach rechts von Fig. 1 verhindert. An der entgegengesetzten Stirnseite der Injektionshülse 2, d. h., an derem Endteil 7, ist ein Innengewinde 8 angebracht, das als Anschlußelement zum Anschliessen eines in Figur 2 gezeigten Zuführungsorgans 10 dient. Die Sperrlippe 4 ist elastisch so verformbar, daß sie sich in Pfeilrichtung Pf radial nach innen und axial in Richtung zum Endteil 7 umbiegt, wenn der Injektionsanker von links nach rechts in Fig. 1 in ein Loch eingeschoben wird, dessen Radius etwa dem Außenradius $R_9$ des Hauptkörpers 9 der Dichtbuchse 1 entspricht. Der Innenradius $R_i$ der Injektionshülse bildet die Begrenzung des Injektionskanals 22, durch den Injektionsmaterial durch den Injektionsanker, insbesondere unter hohem Druck, hindurchgeleitet wird.

Gemäß Fig. 2 ist im rechten Teil, d. h., innerhalb des Loches 12 bis zu der Tiefe T von der Stirnseite 14 des Mauerwerks 11 ausgehend eingeschoben ein erster Injektionsanker in Stellung gebracht, d.

h., bereits verankert. Die Dichtbuchse 1 ist an der Stelle der Sperrlippe 4 zwischen der Injektionshülse 2 und der Lochwandung im Mauerwerk 11 verkeilt und kann sich nicht mehr in der Richtung zur Stirnseite 14 hin innerhalb des Loches 12 bewegen. Im Raum hinter dem Injektionsanker hat bereits in einem vorhergehenden (nicht dargestellten) Vorgang das Injizieren von Injektionsmaterial 13a stattgefunden.

Im der Stirnseite 14 zugewandten vorderen Teil des Loches 12 findet dagegen das Injizieren von Injektionsmaterial 13b im flüssigen bzw. viskosen Zustand gerade statt : Dieser zweite, vordere Injektionsanker mit seiner Dichtbuchse 1 und Injektionshülse 2 steht noch in Verbindung mit dem Zuführorgan 10, beispielsweise einem Verbindungsrohr einer Spritzpistole, so daß Injektionsmaterial 13b mit hohem Druck von beispielsweise 200 bar durch den Injektionsanker hindurch in den Raum zwischen diesem Injektionsanker und dem bereits in der Tiefe T verankerten Injektionsanker eingespritzt werden kann und in die porösen bzw. mit Rissen und Hohlräumen versehenen Teile des Mauerwerks eindringt. Das Mauerwerk 11 kann beispielsweise mit Silikon aufweisendem Injektionsmaterial wasserdicht gemacht werden. Es ist auch möglich, als Injektionsmaterial ein solches zu verwenden, das die Tragfähigkeit des Mauerwerks 11 oder Betons oder Gesteins oder dgl. verbessert. Schließlich können auch Lösungsmittel, beispielsweise Wasser, als Injektionsmaterial 13b verwendet werden, um das das Loch 12 umgebende Material, beispielsweise Salz, zu lösen, wodurch entweder Kavernen gebildet werden oder die in Lösung gebrachte Substanz durch den Injektionsanker hindurch zur weiteren Verwendung nach außen gefördert werden kann.

Der neuerungsgemäße Injektionsanker ist daher auch für sehr verschiedene und höchst unterschiedliche Verwendungszwecke geeignet.

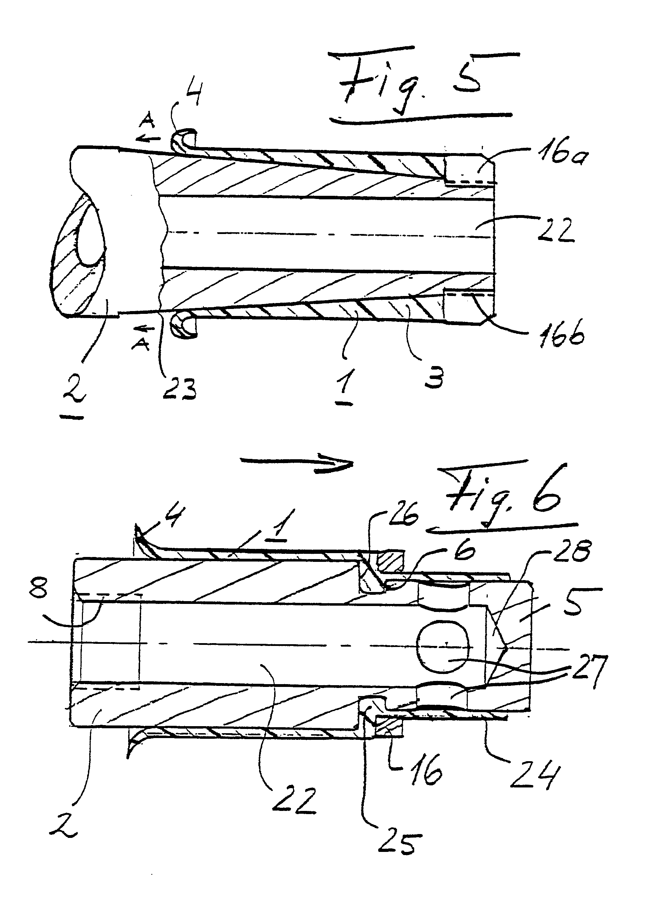

Gemäß Fig. 3 sind drei verschiedene Positionen des Injektionsankers gezeigt. In der oberen Position a befindet sich der Injektionsanker mit der Sperrlippe 4 am Endteil 17 der Dichtbuchse 1 noch außerhalb des Loches 12 des Mauerwerks 11, während der Kopfteil 5 der Injektionshülse 2 bereits in das Loch 12 eingesteckt ist. In dieser Position a spreizt sich die Sperrlippe radial auch noch nach außerhalb des Bereichs der äußeren Mantelfläche des Hauptkörpers der Dichtbuchse 1.

Insbesondere mittels einer Stange, die beispielsweise auch das Zuführorgan 10 selbst bilden kann, wird der Injektionsanker gemäß der Position b tiefer in Einführrichtung $P_E$ in das Loch 12 eingeführt. Dabei drückt die Wandung des Loches 12 die biegeelastische Sperrlippe 4 radial nach innen, so daß sie sich im wesentlichen an den äußeren Umfang der Injektionshülse 2 anlegt, ohne der Weiterbewegung in Pfeilrichtung $P_E$ störend im Wege zu stehen.

Wird nun dagegen gemäß Position c an der Stange bzw. dem Zuführorgan 10 in umgekehrter Pfeilrichtung $P_R$ gezogen, so biegt oder knickt die Sperrlippe 4 um, so daß sich deren radial äußere Enden umgekehrt zur Pfeilrichtung $P_R$, d. h., in Richtung zum Kopfteil 5 umlegen. Hierdurch wird der Injektionsanker innerhalb des Loches 12 geradezu verkeilt, so daß selbst eine größere Kraft in Pfeilrichtung $P_R$ nicht vermag, den Injektionsanker wieder weiter innerhalb des Loches zurück bzw. nach außen, d. h., in Richtung zur Stirnseite 14 des Mauerwerks 11 zu ziehen. Der Injektionsanker befindet sich nun in der Verankerungsstellung, in der er gleichzeitig — von einem Injektionskanal 22 abgesehen — den Bereich des Loches 12 hinter dem Kopfteil 5 von dem Bereich des Loches 12 vor dem Endteil 7 in Richtung zur Stirnseite 14 gut abdichtet. Hierdurch ist es möglich, daß Injektionsmaterial auch unter hohem Druck eingespritzt werden kann, ohne daß sich der Druck abbauen kann.

Nach dem Injizieren von Injektionsmaterial wird das Zuführorgan 10 aus dem Innengewinde der Injektionshülse 2 wieder herausgeschraubt, so daß außerhalb des Loches 12 vor der Stirnseite 14 des Mauerwerks 11 nichts Störendes verbleibt.

Es versteht sich, daß die Verbindung zwischen dem Zuführorgan und dem Injektionsanker auch durch andere Anschlußelemente, beispielsweise Kupplungen, hergestellt werden kann.

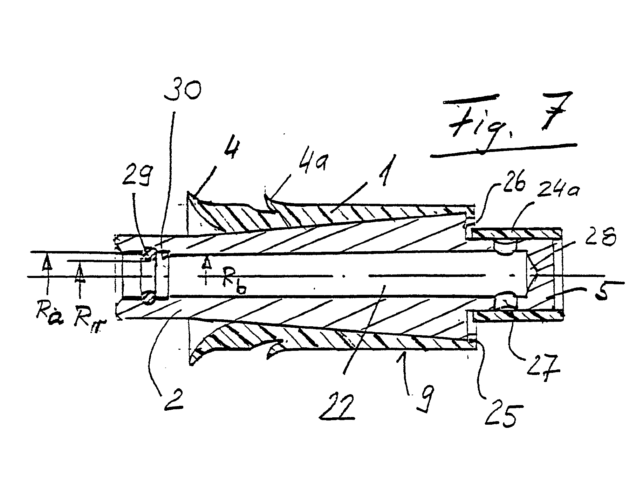

Die in Fig. 4 dargestellte Ausbildung der Neuerung ist mit einem federbelasteten Rückschlagventil versehen, das von einer Ventilkugel 19 gebildet wird, die durch die Feder 19a gegen den Ventilsitz 21 gedrückt wird, weil die Klemmscheibe 20 innerhalb des Injektionskanals 22 der Injektionshülse 2 verklemmt ist. Auch hier befindet sich am Endteil 7 der Injektionshülse 2 ein Innengewinde 8. Das Endteil 7 ist außen als Sechskant 18 ausgebildet und erlaubt das Eingreifen von Schraubschlüsseln.

Die Sperrlippe 4 ist bei dieser Ausbildung nicht wie nach der Ausbildung von Fig. 1 am äußeren Ende des Endteiles 17 der Dichtbuchse 1 angeordnet, sondern ein Stück weit vom Endteil 17 nach der Mitte zu verlagert. Wichtig bei dieser Ausbildung ist, daß die Sperrlippe 4 die Möglichkeit hat, beim Einschieben des Injektionsankers in das Loch 12 elastisch radial nach innen verformt werden zu können, damit es das Einführen in das Loch 12 nicht behindert. Zu diesem Zweck ist der Außendurchmesser der Dichtbuchse 1 im Bereich zwischen der Sperrlippe 4 und dem Endteil 17 vermindert, wodurch ein Aufnahmeraum 15 zur Aufnahme der Sperrlippe 4 beim Einschiebvorgang gebildet wird. Die Dichtbuchse 1 ist bei diesem Ausführungsbeispiel am Kopfteil mit einem sich radial nach innen erstreckenden Boden versehen, der von einer als Anschlag 16 dienenden Scheibe gehalten wird, die ihrerseits von einer Umbördelung am Abrutschen vom Kopfteil 5 der Injektionshülse 2 gehindert wird.

Bei einer Ausbildung der Neuerung sind die Radien und Dicke der Sperrlippe 4 wie folgt :

$R_i = 3$ mm ;
$R_2 = 6,5$ mm ;
$R_g = 8$ mm ;

$R_4 = 9,6$ mm ;
$D_4 = 0,25$ mm ;

bei einem Durchmesser des Loches 12 von 16,2 mm, wodurch die Sperrlippe 4 beim Umkippen auf den Hauptkörper 3 bzw. dessen Außenmantel 9 nicht nur den Zwischenraum zur Lochwandung voll ausfüllt, sondern auch zum Zusammenpressen des eingeklemmten Teiles des Hauptkörpers 3 führt.

Natürlich hängen die Abmessungen des Injektionsankers vom jeweiligen Verwendungszweck ab. Sind beispielsweise Fließen- und Estrichbefestigungen vorgesehen, würden Durchmesser der Löcher, in die der Injektionsanker einzusetzen ist, von etwa 6-8 mm genügen. Bei Zementschlammverpressungen sind dagegen wesentlich größere Löcher in den Mauern oder dgl., nämlich solche in der Größenordnung von 25 mm und größer, zweckmäßiger ; gerade bei Zementschlammverpressungen soll dem freien Fluß des einzupressenden Zementschlammes möglichst wenig Widerstand entgegenstehen, d. h. daß auch der Innendurchmesser $R_i$ groß genug zu wählen ist.

Das Material der Injektionshülse kann auch aus einem anderen Metall als dem beschriebenen bestehen.

Darüber hinaus ist es beispielsweise nach der Ausbildungsform von Fig. 5 möglich, die Injektionshülse 2 auf demjenigen Teil, auf dem die Dichtbuchse 1 aufgesteckt wird, konisch auszubilden. Die Injektionshülse 2 verjüngt sich dann in Richtung zu ihrem freien Ende, das beispielsweise mit einem Außengewinde 16b versehen ist, auf das eine Anschlagschraube 16a aufschraubbar ist, um als Anschlag für den Hauptkörper 3 der Dichtbuchse 1 an derem dicken Ende mit geringstem Innendurchmesser zu dienen. Die Dichtbuchse 1 verjüngt sich hinsichtlich ihres Innendurchmessers in Richtung zum anderen Ende, an dem sich die Sperrlippe 4 befindet, die bei dieser Ausbildungsform im Ursprungszustand mit ihrem am freien äußeren Ende größten Durchmesser etwas nach hinten umgerollt ist. Beim Einstecken des Injektionsankers in Pfeilrichtung wird die Sperrlippe 4 zuerst etwas in Richtung A so umgelenkt, daß sich der Außendurchmesser vermindert ; zu diesem Zweck dient die noch konische Aussparung 23 an der Außenseite der Injektionshülse 2. Beim Zurückschieben des gesamten Injektionsankers entgegengesetzt zur Pfeilrichtung, d. h. in Richtung A, wird dagegen die Sperrlippe 4 mit ihren äußeren Teilen wieder in der umgekehrten, d. h. der dargestellten Richtung umgelenkt, übt dann jedoch ihre Sperrwirkung aus, da die äußere freie Spitze der Dichtlippe 4 sich im Durchmesser gegenüber der dargestellten Ausgangsform wesentlich vermindert hat und sich dabei zwischen dem Außenmantel des Hauptkörpers 3 der Dichtbuchse 1 und der Lochwandung des in Fig. 5 nicht dargestellten Mauerwerks einklemmt.

Gemäß der Ausbildungsform von Figur 6 dient die Dichtbuchse 1 gleichzeitig als sogenanntes « Rückschlagventil », da deren Manschette 24, die sich an dem der Dichtlippe abgewendeten Ende befindet, im Normalzustand die quer zum Injektionskanal 22 der Injektionshülse 2 verlaufenden Durchbrechungen 27 an der Mantelfläche des Kopfteils 5 der Injektionshülse abdeckt. Tritt ein bestimmter Innendruck im Injektionskanal 22 beim Einpressen von Injektionsmaterial in die Injektionshülse 2 auf, dann wird die Manschette 24 radial etwas aufgeweitet und ermöglicht den Durchtritt des Injektionsmaterials durch den Zwischenraum zwischen dem Kopfteil 5 und der Manschette 24. Damit sich der Druck aufbauen kann, endet der Injektionskanal 22 am Bohrungsende 28 innerhalb des Kopfteils 5, der deshalb stirnseitig verschlossen ist. Die Dichtbuchse 1 ist mit einer sich radial nach innen erstreckenden Verdickung 25 in eine radiale Einschnürung zwischen dem Anschlag 6 und der Flanke 26 der Injektionshülse 2 eingepaßt. Der ebenfalls als Anschlag 16 dienende Sperrring hindert zusätzlich das Abziehen der Dichtbuchse 1 von der Injektionshülse 2.

Bei der Ausführungsform von Fig. 7 wird der Injektionsanker nicht mittels Innengewinde, sondern mittels eines Halteringes 29 aus z. B. Gummi mit dem Zuführungsorgan 10, insbesondere einem rohrförmigen Kolben einer Spritzpistole, verbunden. Dabei ist der Innenradius $R_a$ der Injektionshülse 2 an diesem Ende knapp größer als der Außenradius des Zuführungsorgans 10, der Innenradius $R_b$ im übrigen Teil der Injektionshülse 2 aber kleiner als jener Außenradius gewählt, so daß das Zuführungsorgan 10 an der Innenschulter 30 hinter dem Haltering 29 anschlägt, der Haltering 29 aber in eine Ausnehmung des Zuführungsorgans 10 einschnappt und dieses erst bei starkem Zug axial nach außen wieder freigibt. Der Haltering 29 übernimmt daher die Aufgabe einer dichtenden Schnell-Kupplung zwischen Injektionsanker und Zuführungsorgan 10.

Bei dieser Ausbildung ist die Injektionshülse 2 konisch mit zunehmendem Außenradius in Richtung zur Flanke 26 ausgebildet. Hierdurch wird noch mehr Widerstand gegen ein Herausdrücken der Hülse 2 aus der Dichtbüchse 1 erreicht, wenn Injektionsmaterial nach dem Einsetzen des Injektionsankers in das Loch injiziert wird. Die Manschette 24 ist hier eine selbständige Gummibüchse, die beim Injizieren die Durchbrechungen 27 freigibt.

**Patentansprüche**

1. Vorrichtung zum Injizieren von Injektionsmaterial in Löcher von Gesteinen, Bauwerkteilen, Erzgängen, Erdformationen, Salzstöcken od. dgl., mit einer zum Hindurchleiten des Injektionsmaterials dienenden Injektionshülse (2) von der ein Kopfteil (5) beliebig weit in das Loch (12) einführbar ist und am Endteil (7) ein Anschlußelement zum Anschließen eines Zuführorgans (10) für das Injektionsmaterial (13b) aufweist, und mit einer einen Hauptkörper (3) mit einer im wesentlichen zylindrischen äußeren Mantelfläche aufweisenden Dichtbuchse (1) aus mindestens teilweise verformbarem Material, wie einem Elastomer, welches die Injektionshülse mindestens teilweise umgibt und den Innenraum des Loches in einer Dichtstellung abdichtet, in der ein Halteelement die Injektionshülse gegen Herausziehen aus dem Loch verankert, dadurch gekennzeichnet, daß die Dichtbuchse (1) mindestens eine elastisch radial nach innen drückbare Sperrlippe (4) aufweist, die mindestens teilweise radial über die äußere Mantelfläche (9) vorsteht und durch Verformen beim Zurückziehen der Injektionshülse (2) in Richtung zum Endteil (7) als Halteelement dient.

2. Injektionsvorrichtung nach Anspruch 1, dadurch gekennzeichnet, daß die Dichtbuchse (1) eine ringförmige Sperrlippe (4) aufweist.

3. Injektionsvorrichtung nach Anspruch 1 oder 2, dadurch gekennzeichnet, daß die Dichtbuchse (1) mehrere lappenförmige Sperrlippen (4) aufweist.

4. Injektionsvorrichtung nach einem der vorhergehenden Ansprüche, dadurch gekennzeichnet, daß mehrere Sperrlippen (4) in axialem Abstand von der Mantelfläche (9) abstehen.

5. Injektionsvorrichtung nach einem der vorhergehenden Ansprüche, dadurch gekennzeichnet, daß der Hauptkörper (3) der Dichtbuchse (1) im wesentlichen als Hohlzylinder ausgebildet ist.

6. Injektionsvorrichtung nach einem der vorhergehenden Ansprüche, dadurch gekennzeichnet, daß die Dichtbuchse (1) auf die Injektionshülse (2) aufgesteckt ist und an einem Anschlag (6, 16) am Kopfteil (5) der Injektionshülse (2) anschlägt.

7. Injektionsvorrichtung nach Anspruch 6, dadurch gekennzeichnet, daß die Dichtbuchse (1) vom Kopfteil (5) der Injektionshülse (2) ausgehend auf diese aufgesteckt ist.

8. Injektionsvorrichtung nach einem der vorhergehenden Ansprüche, dadurch gekennzeichnet, daß die Injektionshülse (2) aus im wesentlichen formstabilem Material besteht.

9. Injektionsvorrichtung nach Anspruch 8, dadurch gekennzeichnet, daß die Injektionshülse (2) aus Aluminium besteht.

10. Injektionsvorrichtung nach einem der Ansprüche 1-8, dadurch gekennzeichnet, daß die Dichtbuchse (1) und die Injektionshülse (2) aus Kunststoff bestehen und aus einem Stück gebildet sind.

11. Injektionsvorrichtung nach einem der vorhergehenden Ansprüche, dadurch gekennzeichnet, daß das Anschlußelement der Injektionshülse (2) ein Innengewinde (8) aufweist.

12. Injektionsvorrichtung nach einem der vorhergehenden Ansprüche, dadurch gekennzeichnet, daß die Injektionshülse (2) ein federbelastetes Rückschlagventil aufweist.

13. Injektionsvorrichtung nach einem der vorhergehenden Ansprüche, dadurch gekennzeichnet, daß sich die Sperrlippe (4) mindestens teilweise axial in Richtung zum Endteil (17) hinzieht.

14. Injektionsvorrichtung nach einem der vorhergehenden Ansprüche, dadurch gekennzeichnet, daß der Kopfteil (5) der Injektionshülse (2) stirnseitig abgeschlossen ist, aber an dessen Mantelfläche endende Durchbrechungen (27) aufweist, die zum Injektionskanal (22) führen, und daß die Dichtbuchse (1) einen die Durchbrechungen (27) abdeckende, bei Druck innerhalb des Injektionskanals (22) jedoch federelastisch freigebende Manschette (24) aufweist.

## Claims

1. An injection device for injecting material into holes in rocks, construction members, ore veins, earth formations, salt blocks and the like, comprising an injection sleeve (2) which serves for the passage of the injection material, of which a head part (5) can be introduced as far as desired into a hole (12) and of which an end part (7) has a connecting means for the connection of a feed member (10) for the injection material (13b), and a sealing bush (1) which has a main body (3) with a substantially cylindrical outer circumferential surface and which consists of at least partly deformable material, such as an elastomer, which at least partly surrounds the injection sleeve and seals the interior of the hole at a sealing position in which a retaining member anchors the injection sleeve against extraction from the hole, characterised in that the sealing bush (1) has at least one stop lip (4) which can be pressed resiliently radially inwards and which protrudes at least partly radially from the outer circumferential surface (9) and by deformation upon withdrawal of the injection sleeve (2) in the direction of the end part (7) serves as the retaining member.

2. An injection device according to Claim 1, characterised in that the sealing bush (1) has an annular stop lip (4).

3. An injection device according to Claim 1 or 2, characterised in that the sealing bush (1) has a plurality of tongue-like stop lips (4).

4. An injection device according to any of the preceding Claims, characterised in that a plurality of stop lips (4), axially spaced apart, protrude from the circumferential surface (9).

5. An injection device according to any of the preceding Claims, characterised in that the main body (3) of the sealing bush (1) is substantially in the form of a hollow cylinder.

6. An injection device according to any of the preceding Claims, characterised in that the sealing bush (1) is fitted on to the injection sleeve (2) and abuts against an abutment (6, 16) on the head part (5) of the injection sleeve (2).

7. An injection device according to Claim 6, characterised in that the sealing bush (1) is fitted on to the injection sleeve (2) starting from the head part (5) of the latter.

8. An injection device according to any of the preceding Claims, characterised in that the injection sleeve (2) is formed of substantially inherently stable material.

9. An injection device according to Claim 8, characterised in that the injection sleeve (2) is formed of aluminium.

10. An injection device according to any of Claims 1 to 8, characterised in that the sealing bush (1) and the injection sleeve (2) are formed of plastics material and are integrally formed.

11. An injection device according to any of the preceding Claims, characterised in that the connecting means of the injection sleeve (2) has an internal thread (8).

12. An injection device according to any of the preceding Claims, characterised in that the injection sleeve (2) has a spring-loaded non-return valve.

13. An injection device according to any of the preceding Claims, characterised in that the stop lip (4) extends at least partly axially in the direction of the end portion (17).

14. An injection device according to any of the preceding Claims, characterised in that the head part (5) of the injection sleeve (2) is closed at the end face but has openings (27) ending on its circumferential surface and leading to the injection duct (22), and in that the sealing bush (1) has a collar (24) covering the openings (27) but uncovering them in resiliently flexible manner when pressure is applied inside the injection duct (22).

## Revendications

1. Dispositif pour injecter une matière d'injection dans des trous de pierres, de parties de maçonnerie, de veines de minerai, de couches géologiques, d'amas salins ou de structures analogues avec une douille d'injection (2) servant à introduire la matière à injecter et dont une partie de tête (5) peut être introduite à une profondeur désirée dans le trou (12) et présente à sa partie terminale (7) un élément de raccordement pour la jonction d'un organe d'arrivée (10) pour la matière injectée (13b) et avec un manchon d'étanchéité (1) présentant un corps principal (3) avec une surface d'enveloppe extérieure pratiquement cylindrique et établi en une matière au moins partiellement déformable telle qu'un élastomère qui entoure au moins partiellement la douille d'injection et calfeutre l'espace intérieur du trou dans une position d'étanchéité dans laquelle un élément d'arrêt retient la douille d'injection contre une extraction en dehors du trou, caractérisé en ce que le manchon d'étanchéité (1) présente au moins une lèvre de blocage (4) élastiquement radiale pouvant être repoussée vers l'intérieur qui dépasse radialement au moins en partie au delà de la surface d'enveloppe (9) et qui sert d'élément d'arrêt par déformation lors de l'extraction de la douille d'injection (2) en direction de la partie terminale (7).

2. Dispositif d'injection selon la revendication 1, caractérisé en ce que le manchon d'étanchéité (1) présente une lèvre de blocage annulaire (4).

3. Dispositif d'injection selon la revendication 1 ou 2, caractérisé en ce que le manchon d'étanchéité (1) présente plusieurs lèvres de blocage (4) en forme de languettes.

4. Dispositif d'injection selon l'une des revendications précédentes, caractérisé en ce que plusieurs lèvres de blocage (4) sont écartées axialement sur la surface d'enveloppe (9).

5. Dispositif d'injection selon l'une des revendications précédentes, caractérisé en ce que le corps principal (3) du manchon d'étanchéité (1) est constitué essentiellement par un cylindre creux.

6. Dispositif d'injection selon l'une des revendications précédentes, caractérisé en ce que le manchon d'étanchéité (1) est emboîté sur la douille d'injection (2) et bute contre une butée (6, 16) à la partie de tête (5) de la douille d'injection (2).

7. Dispositif d'injection selon la revendication 6, caractérisé en ce que le manchon d'étanchéité (1) est emboîté sur la douille d'injection (2) en partant de la partie de tête (5) de la douille d'injection.

8. Dispositif d'injection selon l'une des revendications précédentes, caractérisé en ce que la douille d'injection (2) est en matière de forme essentiellement stable.

9. Dispositif d'injection selon la revendication 8, caractérisé en ce que la douille d'injection (2) est en aluminium.

10. Dispositif d'injection selon l'une des revendications 1-8, caractérisé en ce que le manchon d'étanchéité (1) et la douille d'injection (2) sont en matière synthétique et établis en une pièce.

11. Dispositif d'injection selon l'une des revendications précédentes, caractérisé en ce que l'élément de raccordement de la douille d'injection (2) présente un filetage intérieur.

12. Dispositif d'injection selon l'une des revendications précédentes, caractérisé en ce que la douille d'injection (2) présente un clapet de retenue rappelé par ressort.

13. Dispositif d'injection selon l'une des revendications précédentes, caractérisé en ce que la lèvre de blocage (4) fléchit axialement au moins partiellement en direction de la partie terminale (17).

14. Dispositif d'injection selon l'une des revendications précédentes, caractérisé en ce que la partie de tête (5) de la douille d'injection (2) est obturée en bout mais présente sur sa surface périphérique des ouvertures (27) qui aboutissent au canal d'injection (22) et que le manchon d'étanchéité (1) présente une manchette (24) recouvrant les ouvertures (27) mais les découvrant par élasticité lors d'une pression à l'intérieur du canal d'injection (22).

Fig. 1

Fig. 2

0 122 924

Fig. 3

Fig. 4

*Fig. 5*

*Fig. 6*

*Fig. 7*